(19) Europäisches Patentamt European Patent Office Office européen des brevets

(11) **EP 3 780 178 A1**

(12) **EUROPEAN PATENT APPLICATION**
published in accordance with Art. 153(4) EPC

(43) Date of publication:
**17.02.2021 Bulletin 2021/07**

(21) Application number: **19781698.6**

(22) Date of filing: **26.02.2019**

(51) Int Cl.:
**H01M 4/525** (2010.01)

(86) International application number:
**PCT/JP2019/007310**

(87) International publication number:
**WO 2019/193875 (10.10.2019 Gazette 2019/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.04.2018 JP 2018070906**

(71) Applicant: **Panasonic Intellectual Property Management Co., Ltd.**
**Osaka-shi, Osaka 540-6207 (JP)**

(72) Inventors:
- **TOCHIO, Takaya**
  **Osaka-shi, Osaka 540-6207 (JP)**
- **OGASAWARA, Takeshi**
  **Osaka-shi, Osaka 540-6207 (JP)**

(74) Representative: **Vigand, Philippe et al**
**Novagraaf International SA**
**Chemin de l'Echo 3**
**1213 Onex - Genève (CH)**

(54) **POSITIVE ELECTRODE ACTIVE SUBSTANCE FOR NON-AQUEOUS ELECTROLYTE SECONDARY BATTERY AND NON-AQUEOUS ELECTROLYTE SECONDARY BATTERY**

(57) A positive electrode active substance for a non-aqueous electrolyte secondary battery according to this embodiment is characterized by having a lithium transition metal oxide that contains Ni and Al, wherein: Ni content in the lithium transition metal oxide is 91 mol% or greater with respect to the total number of moles of metal elements excluding Li; the lithium transition metal oxide further contains 0.02 mol% or more of sulphate ion; and the lithium transition metal oxide, when subjected to X ray diffraction, produces an X ray diffraction pattern in which the half width n of the diffraction peak of the (208) surface is $0.30° \leq n \leq 0.50°$.

EP 3 780 178 A1

**Description**

TECHNICAL FIELD

The present invention relates to techniques for a positive electrode active material for a non-aqueous electrolyte secondary battery, and a non-aqueous electrolyte secondary battery.

BACKGROUND ART

Recently, a non-aqueous electrolyte secondary battery comprising a positive electrode, a negative electrode and a non-aqueous electrolyte, in which charge/discharge is performed by movement of lithium ions and the like between the positive electrode and the negative electrode, has been used widely as a high-output and high-energy density secondary battery.
The followings are, for example, known as positive electrode active materials for use in positive electrodes of non-aqueous electrolyte secondary batteries.
For example, Patent Literature 1 discloses a positive electrode active material including a lithium transition metal oxide which is represented by general formula $NiM(OH)_2$ (wherein M represents at least one or more elements of a transition metal other than Ni, an alkali earth metal element, and Al, Ga, In and Si) and which is in the form of monodispersed primary particles.
For example, Patent Literature 2 discloses a positive electrode active material including a lithium transition metal oxide represented by general formula $Li_{(1+\delta)}Mn_xNi_yCo_{(1-x-y)}O_2$, in which $\delta$, x and y satisfy respective relationships of $-0.15 < \delta < 0.15$, $0.1 < x \leq 0.5$ and $0.5 < x + y \leq 1.0$.

CITATION LIST

PATENT LITERATURES

PATENT LITERATURE 1: Japanese Unexamined Patent Application Publication No. 2010-70431
PATENT LITERATURE 2: Japanese Unexamined Patent Application Publication No. 2006-202702

SUMMARY

Meanwhile, in a case where a lithium transition metal oxide in which the proportion of Ni relative to the total number of moles of metal element(s) except for Li is 91 mol% or more is used as a positive electrode active material, a problem is that, although an increase in capacity of a non-aqueous electrolyte secondary battery may be achieved, charge/discharge cycle characteristics are remarkably deteriorated. While it is also considered that any metal element other than Ni is added for the purpose of improving charge/discharge cycle characteristics, mere addition of other metal element may cause an increase in charge transfer resistance in charge/discharge to result in deterioration in battery capacity.
It is an advantage of the present disclosure to provide a positive electrode active material for a non-aqueous electrolyte secondary battery and a non-aqueous electrolyte secondary battery, in which the non-aqueous electrolyte secondary battery may be not only suppressed in deterioration in charge/discharge cycle characteristics, but also suppressed in an increase in charge transfer resistance in charge/discharge and deterioration in battery capacity, in the case of use of a lithium transition metal oxide in which the proportion of Ni relative to the total number of moles of metal element(s) except for Li is 91 mol% or more.
A positive electrode active material for a non-aqueous electrolyte secondary battery according to one aspect of the present disclosure has a Ni- and Al-containing lithium transition metal oxide, wherein a proportion of Ni in the lithium transition metal oxide is 91 mol% or more relative to the total number of moles of metal element(s) except for Li, the lithium transition metal oxide includes 0.02 mol% or more of sulfate ions, and a half width n of a diffraction peak of the (208) plane of the lithium transition metal oxide, in an X-ray diffraction pattern with X-ray diffraction, is $0.30° \leq n \leq 0.50°$.
A non-aqueous electrolyte secondary battery according to one aspect of the present disclosure comprises a positive electrode having the positive electrode active material for a non-aqueous electrolyte secondary battery.
According to one aspect of the present disclosure, not only deterioration in charge/discharge cycle characteristics can be suppressed, but also an increase in charge transfer resistance in charge/discharge and deterioration in battery capacity can be suppressed.

## DESCRIPTION OF EMBODIMENTS

A positive electrode active material for a non-aqueous electrolyte secondary battery according to one aspect of the present disclosure has a Ni- and Al-containing lithium transition metal oxide, wherein the proportion of Ni in the lithium transition metal oxide is 91 mol% or more relative to the total number of moles of metal element(s) except for Li, the lithium transition metal oxide includes 0.02 mol% or more of sulfate ions, and the half width n of the diffraction peak of the (208) plane of the lithium transition metal oxide, in an X-ray diffraction pattern with X-ray diffraction, is $0.30° \leq n \leq 0.50°$. The reason why deterioration in charge/discharge cycle characteristics, an increase in charge transfer resistance in charge/discharge, and deterioration in battery capacity are suppressed in the case of use of the positive electrode active material for a non-aqueous electrolyte secondary battery, although not sufficiently clear, is presumed as follows.

The Ni- and Al-containing lithium transition metal oxide has a layered structure having, for example, a transition metal layer of Ni, Al and/or the like, a Li layer, and an oxygen layer, and Li ions present in the Li layer reversely move in and out, thereby allowing a charge/discharge reaction of a battery to progress. The half width of the diffraction peak of the (208) plane, in an X-ray diffraction pattern with X-ray diffraction, is here an index representing the fluctuation in arrangement between the Li layer and the transition metal layer, and it is considered that, in a case where the half width is in the above predetermined range, the arrangement between the Li layer and the transition metal layer is properly fluctuated and binding of Li ions in the Li layer is relaxed to some extent, thereby resulting in smooth movement in and out of Li ions in the Li layer and suppression of deterioration in charge/discharge cycle characteristics, in a charge/discharge reaction. It is also considered that the lithium transition metal oxide includes sulfate ions in the above predetermined amount and thus the surface of the lithium transition metal oxide is modified and is specifically increased in ion conductivity, thereby allowing an increase in charge transfer resistance to be suppressed to result in suppression of deterioration in battery capacity.

Hereinafter, one example of a non-aqueous electrolyte secondary battery using a positive electrode active material for a non-aqueous electrolyte secondary battery according to one aspect of the present disclosure will be described.

A non-aqueous electrolyte secondary battery according to one example of an embodiment comprises a positive electrode, a negative electrode and a non-aqueous electrolyte. A separator is suitably provided between the positive electrode and the negative electrode. Specifically, the secondary battery has a structure where a wound electrode assembly formed by winding the positive electrode and the negative electrode with the separator being interposed therebetween, and the non-aqueous electrolyte are housed in an outer package. The electrode assembly is not limited to such a wound electrode assembly, and other form of an electrode assembly, such as a stacked electrode assembly formed by stacking the positive electrode and the negative electrode with the separator being interposed therebetween, may also be applied. The form of the non-aqueous electrolyte secondary battery is not particularly limited, and examples can include cylindrical, square, coin, button, and laminate forms.

Hereinafter, the positive electrode, the negative electrode, the non-aqueous electrolyte and the separator for use in the non-aqueous electrolyte secondary battery according to one example of an embodiment will be described in detail.

<Positive Electrode>

The positive electrode is configured from, for example, a positive electrode current collector such as metal foil and a positive electrode active material layer formed on the positive electrode current collector. The positive electrode current collector which can be here used is, for example, any foil of a metal which is stable in the potential range of the positive electrode, such as aluminum, or any film obtained by placing such a metal on a surface layer. The positive electrode active material layer includes, for example, a positive electrode active material, a binder, a conductive agent, and the like.

The positive electrode is obtained by, for example, applying a positive electrode mixture slurry including a positive electrode active material, a binder, a conductive agent, and the like onto the positive electrode current collector and drying the resultant, thereby forming a positive electrode active material layer on the positive electrode current collector, and rolling the positive electrode active material layer.

The positive electrode active material includes a Ni- and Al-containing lithium transition metal oxide. The proportion of Ni in the lithium transition metal oxide relative to the total number of moles of metal element(s) except for lithium is 91 mol% or more, preferably in the range from 91 mol% to 99 mol%, more preferably in the range from 91 mol% to 96 mol%. In a case where the proportion of Ni is less than 91 mol%, an increase in capacity of a battery is inherently difficult to achieve.

Al in the Ni- and Al-containing lithium transition metal oxide, for example, may be uniformly dispersed in the crystal structure of the Ni-containing lithium transition metal oxide, or may be present in a portion of the crystal structure. Some Al included in the crystal structure may be precipitated on the surface of particles of the lithium transition metal oxide at the stage of production of the lithium transition metal oxide, and such Al precipitated is also Al included in the lithium transition metal oxide.

The Ni- and Al-containing lithium transition metal oxide may include any element other than Al, and is represented by, for example, the following general formula.

$$Li_xNi_aCo_bAl_cM_dO_2 \qquad (1)$$

In the formula, a representing the proportion of Ni may be $x \geq 0.91$, and is preferably $0.91 \leq x \leq 0.99$, more preferably $0.91 \leq x \leq 0.96$. In the formula, b representing the proportion of Co is preferably $b < 0.06$, more preferably $0.005 \leq b \leq 0.045$ from the viewpoint of, for example, suppression of deterioration in charge/discharge cycle characteristics. In the formula, c representing the proportion of Al is preferably $0.03 < c$, more preferably $0.04 \leq c \leq 0.06$ from the viewpoint of, for example, suppression of deterioration in charge/discharge cycle characteristics.

M in the formula is not particularly limited as long as M is any element other than Li, Ni, Al and Co, and examples thereof include at least one element selected from the group consisting of Ti, Nb, Mn, Si, Mo, Zr, V, Fe, Mg, Cr, Cu, Sn, Ta, W, Na, K, Ba, Sr, Bi, Be, Zn, Ca and B. In particular, M in the formula is preferably at least one element selected from the group consisting of Ti, Nb, Mn, Si and Mo from the viewpoint of, for example, suppression of deterioration in charge/discharge cycle characteristics. In the formula, d representing the proportion of M is preferably $0 \leq d \leq 0.03$, more preferably $0.005 \leq d \leq 0.025$.

In the formula, x representing the proportion of Li preferably satisfies $0.95 \leq x \leq 1.10$, more preferably satisfies $0.97 \leq x \leq 1.03$ from the viewpoint of, for example, an enhancement in battery capacity.

The Ni- and Al-containing lithium transition metal oxide includes sulfate ions. The sulfate ions encompasses any forms including those attached as a $SO_4$ compound onto the surface of particles of the lithium transition metal oxide, those incorporated as a $SO_4$ compound into secondary particles of the lithium transition metal oxide, and those included in the crystal structure of Ni- and Al-containing lithium transition metal oxide.

Examples of such a $SO_4$ compound attached onto the surface of particles or incorporated into secondary particles include $Al_2(SO_4)_3$, $Ti(SO_4)_2$, $MnSO_4$, $Nb_2(SO_4)_3$, $Si(SO_4)_2$, $Mo(SO_4)_3$, $Fe_2(SO_4)_3$, $BaSO_4$, $CaSO_4$, $CuSO_4$, $MgSO_4$, $SrSO_4$ and $ZnSO_4$.

The content of the sulfate ions in the Ni- and Al-containing lithium transition metal oxide may be 0.02 mol% or more, and is preferably in the range from 0.02 mol% to 0.12 mol%, more preferably in the range from 0.03 to 0.1, from the viewpoint of suppression of charge transfer resistance in charge/discharge and of deterioration in battery capacity. The content of the sulfate ions is here measured as follows.

A sample solution obtained by adding 1 g of the Ni- and Al-containing lithium transition metal oxide into 50 mL of pure water is shaken at room temperature for 24 hours. The sample solution after stirring is filtered, and a filtrate is collected. The amount of sulfate ions in the filtrate collected is measured by ion chromatography. The content of each element constituting the Ni- and Al-containing lithium transition metal oxide can be measured by an inductively coupled plasma atomic emission spectrometer (ICP-AES), an electron probe microanalyzer (EPMA), an energy dispersive X-ray analyzer (EDX), and the like.

The half width n of the diffraction peak of the (208) plane of the Ni- and Al-containing lithium transition metal oxide, in an X-ray diffraction pattern with X-ray diffraction, may be $0.30° \leq n \leq 0.50°$, preferably $0.30° \leq n \leq 0.45°$, from the viewpoint of suppression of deterioration in charge/discharge cycle characteristics. In a case where the half width n of the diffraction peak of the (208) plane is less than 0.30°, binding of Li ions in the Li layer is strong and charge/discharge cycle characteristics are deteriorated, as compared with a case where the above range is satisfied. A case where the half width n of the diffraction peak of the (208) plane is more than 0.50° causes crystallinity of the Ni-containing Li transition metal oxide to be deteriorated, causes the backbone of a crystal structure to be brittle and causes charge/discharge cycle characteristics to be deteriorated, as compared with a case where the above range is satisfied.

The X-ray diffraction pattern is obtained by using a powder X-ray diffractometer (trade name "RINT-TTR", manufactured by Rigaku Corporation, radiation source Cu-K$\alpha$) according to powder X-ray diffractometry in the following conditions.

Measurement range; 15 to 120°
Scanning speed; 4°/min
Analysis range; 30 to 120°
Background; B-spline
Profile function; split pseudo-Voigt function
Binding conditions; Li(3a) + Ni(3a) = 1

$$Ni(3a) + Ni(3b) = y$$

ICSD No.; 98-009-4814

The content of the Ni- and Al-containing lithium transition metal oxide is, for example, preferably 90% by mass, preferably 99% by mass or more relative to the total mass of the positive electrode active material for a non-aqueous electrolyte secondary battery, from the viewpoint of, for example, effective suppression of deterioration in charge/discharge cycle characteristics, deterioration in charge transfer resistance in charge/discharge or deterioration in battery capacity.

The positive electrode active material for a non-aqueous electrolyte secondary battery of the present embodiment may include any lithium transition metal oxide other than the Ni- and Al-containing lithium transition metal oxide. Examples of such any other lithium transition metal oxide include a lithium transition metal oxide in which the content of Ni is 0 mol% to less than 91 mol%.

One example of the method for producing the Ni- and Al-containing lithium transition metal oxide will be described.

The method for producing the Ni-containing lithium transition metal oxide comprises, for example, a first step of mixing a Ni-containing compound, a Li compound, a metal element-containing $SO_4$ compound and a metal element-containing non-$SO_4$ compound, and a second step of firing the mixture.

The Ni-containing compound for use in the first step may be a composite compound including any other element(s) other than Ni, such as Al and Co, and examples thereof include oxide including Ni. The Li compound for use in the first step is, for example, lithium carbonate or lithium hydroxide.

The metal element-containing $SO_4$ compound for use in the first step is, for example, a $SO_4$ compound containing a metal element such as Al, Ti, Nb, Mn, Si, Mo, Fe, Ba, Ca, Cu, Mg, Sr and Zn, and examples thereof include $Al_2(SO_4)_3$, $Ti(SO_4)_2$, $MnSO4$, $Nb_2(SO_4)_3$, $Si(SO_4)_2$, $Mo(SO_4)_3$, $Fe_2(SO_4)_3$, $BaSO_4$, $CaSO_4$, $CuSO_4$, $MgSO_4$, $SrSO_4$ and $ZnSO_4$.

The metal element-containing non-$SO_4$ compound for use in the first step is a compound containing the same element as or a different element from the metal element included in the $SO_4$ compound, and examples thereof include hydroxide or oxide containing a metal element such as Al, Ti, Nb, Mn, Si, Mo, Fe, Ba, Ca, Cu, Mg, Sr and/or Zn.

Both the metal element-containing $SO_4$ compound and the metal element-containing non-$SO_4$ compound are added to thereby facilitate control of the half width n of the diffraction peak of the (208) plane of the Ni- and Al-containing lithium transition metal oxide finally obtained, in the predetermined range. While the Ni-containing compound, the Li compound and the metal element-containing $SO_4$ compound may be mixed and the mixture may be fired in a case where the amount of sulfate ions included in the Ni- and Al-containing lithium transition metal oxide is merely controlled in the predetermined range, it is difficult in this case to control the half width n of the diffraction peak of the (208) plane of the Ni- and Al-containing lithium transition metal oxide finally obtained, in the predetermined range.

The mixing ratio between the metal element-containing $SO_4$ compound and the metal element-containing non-$SO_4$ compound is, for example, preferably in the range from 1:9 to 7:3. A lower ratio of the metal element-containing $SO_4$ compound cannot sometimes allow the amount of sulfate ions included in the Ni- and Al-containing lithium transition metal oxide finally obtained, to be controlled in the predetermined range, and a higher ratio of the metal element-containing $SO_4$ compound may sometimes cause the amount of Li present in the crystal structure of the Ni- and Al-containing lithium transition metal oxide finally obtained, to be reduced, resulting in deterioration in battery capacity.

In the second step, the mixture obtained in the first step is fired at a predetermined temperature for a predetermined time, thereby obtaining a Ni- and Al-containing lithium transition metal oxide according to the present embodiment. The mixture is preferably fired in the second step at a temperature of, for example, in the range from 500°C to 900°C. The firing time is preferably, for example, 6 to 24 hours. The firing of the mixture obtained in the second step is preferably performed in an oxygen gas flow.

Hereinafter, other material(s) included in the positive electrode active material layer will be described.

Examples of the conductive agent included in the positive electrode active material layer include carbon powders of carbon black, acetylene black, ketchen black, and graphite. These may be used singly or in combinations of two or more kinds thereof.

Examples of the binder included in the positive electrode active material layer include a fluoropolymer and a rubber-based polymer. Examples of the fluoropolymer include polytetrafluoroethylene (PTFE), polyvinylidene fluoride (PVdF), or any modified product thereof, and examples of the rubber-based polymer include an ethylene-propyleneisoprene copolymer and an ethylene-propylene-butadiene copolymer. These may be used singly or in combinations of two or more kinds thereof.

<Negative Electrode>

The negative electrode comprises, for example, a negative electrode current collector such as metal foil and a negative electrode active material layer formed on the negative electrode current collector. The negative electrode current collector which can be here used is, for example, any foil of a metal which is stable in the potential range of the negative electrode, such as copper, or any film obtained by placing such a metal on a surface layer. The negative electrode active material layer includes, for example, a negative electrode active material, a binder, a thickener, and the like.

The negative electrode is obtained by, for example, applying a negative electrode mixture slurry including a negative electrode active material, a thickener, and a binder onto a negative electrode current collector and drying the resultant, thereby forming a negative electrode active material layer on the negative electrode current collector, and rolling the negative electrode active material layer.

The negative electrode active material included in the negative electrode active material layer is not particularly limited as long as the material can occlude and release lithium ions, and examples thereof include a carbon material, a metal which can form an alloy together with lithium, or an alloy compound including such a metal. The carbon material which can be here used is, for example, any of graphites such as natural graphite, non-graphitizable carbon and artificial graphite, and cokes, and examples of the alloy compound include any compound including at least one metal which can form an alloy together with lithium. Such an element which can form an alloy together with lithium is preferably silicon or tin, and silicon oxide, tin oxide or the like obtained by binding such an element to oxygen can also be used. A mixed product of the carbon material with a silicon or tin compound can be used. Any other than the above can also be used where the charge/discharge potential to metallic lithium such as lithium titanate is higher than that of the carbon material or the like.

The binder included in the negative electrode active material layer, which can be here used, is for example, a fluoropolymer or a rubber-based polymer, as in the case of the positive electrode, and a styrene-butadiene copolymer (SBR) or a modified product thereof may also be used. The binder included in the negative electrode active material layer, which can be here used, is for example, a fluororesin, PAN, a polyimide-based resin, an acrylic resin, or a polyolefin-based resin, as in the case of the positive electrode. In a case where the negative electrode mixture slurry is prepared by use of an aqueous solvent, styrene-butadiene rubber (SBR), CMC or a salt thereof, polyacrylic acid (PAA) or a salt thereof (PAA-Na, PAA-K or the like, alternatively, a partially neutralized salt may be adopted), polyvinyl alcohol (PVA), or the like is preferably used.

Examples of the thickener included in the negative electrode active material layer include carboxymethylcellulose (CMC) and polyethylene oxide (PEO). These may be used singly or in combinations of two or more kinds thereof.

<Non-Aqueous Electrolyte>

The non-aqueous electrolyte includes a non-aqueous solvent and an electrolyte salt dissolved in the non-aqueous solvent. The non-aqueous electrolyte is not limited to a liquid electrolyte (non-aqueous electrolytic solution), and may be a solid electrolyte using a gel-like polymer or the like. The non-aqueous solvent which can be used is, for example, any of esters, ethers, nitriles such as acetonitrile, amides such as dimethylformamide, and a mixed solvent of two or more kinds thereof. The non-aqueous solvent may contain a halogen-substituted product obtained by at least partially replacing hydrogen in such a solvent with a halogen atom such as fluorine.

Examples of the esters include cyclic carbonates such as ethylene carbonate (EC), propylene carbonate (PC) and butylene carbonate, linear carbonates such as dimethyl carbonate (DMC), ethyl methyl carbonate (EMC), diethyl carbonate (DEC), methyl propyl carbonate, ethyl propyl carbonate and methyl isopropyl carbonate, cyclic carboxylates such as y-butyrolactone (GBL) and y-valerolactone (GVL), and linear carboxylates such as methyl acetate, ethyl acetate, propyl acetate, methyl propionate (MP), ethyl propionate and y-butyrolactone.

Examples of the ethers include cyclic ethers such as 1,3-dioxolane, 4-methyl-1,3-dioxolane, tetrahydrofuran, 2-methyltetrahydrofuran, propylene oxide, 1,2-butylene oxide, 1,3-dioxane, 1,4-dioxane, 1,3,5-trioxane, furan, 2-methylfuran, 1,8-cineol and crown ether, and linear ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxytoluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether and tetraethylene glycol dimethyl ether.

Any of a fluorinated cyclic carbonate such as fluoroethylene carbonate (FEC), a fluorinated linear carbonate, and a fluorinated linear carboxylate such as methyl fluoropropionate (FMP) is preferably used as the halogen-substituted product.

The electrolyte salt is preferably a lithium salt. Examples of the lithium salt include $LiBF_4$, $LiClO_4$, $LiPF_6$, $LiAsF_6$,

$LiSbF_6$, $LiAlCl_4$, $LiSCN$, $LiCF_3SO_3$, $LiCF_3CO_2$, $Li(P(C_2O_4)F_4)$, $LiPF_{6-x}(C_nF_{2n+1})_x$ (1 < x < 6 and n is 1 or 2), $LiB_{10}Cl_{10}$, LiCl, LiBr, LiI, lithium chloroborane, lithium lower aliphatic carboxylate, borates such as $Li_2B_4O_7$ and $Li(B(C_2O_4)F_2)$, and imide salts such as $LiN(SO_2CF_3)_2$, $LiN(C_1F_{21+1}SO_2)(C_mF_{2m+i}SO_2)$ {1 and m are each an integer of 0 or more}. Such lithium salts may be used singly or in combinations of two or more kinds thereof. In particular, $LiPF_6$ is preferably used from the viewpoints of ion conductivity, electrochemical stability, and the like. The concentration of the lithium salt is preferably 0.8 to 1.8 mol per liter of the non-aqueous solvent.

<Separator>

The separator here used is, for example, a porous sheet having ion permeability and insulating properties. Examples of the porous sheet include a microporous thin film, a woven cloth, and an unwoven cloth. The material of the separator is suitably an olefin-based resin such as polyethylene or polypropylene, cellulose, or the like. The separator here used may be a stacked article having a cellulose fiber layer and a thermoplastic resin fiber layer of an olefin-based resin or the like, or may be one obtained by applying an aramid resin or the like to the surface of the separator. A filler layer including an inorganic filler may also be formed at the interface between the separator and at least one of the positive electrode and the negative electrode. Examples of the inorganic filler include an oxide containing at least one of titanium (Ti), aluminum (Al), silicon (Si) and magnesium (Mg), a phosphoric acid compound, and such a compound whose surface is treated with a hydroxide or the like. The filler layer can be formed by, for example, applying a slurry containing the filler onto the surface of the positive electrode, the negative electrode or the separator.

EXAMPLES

Hereinafter, the present invention will be further described with reference to Examples, but the present invention is not intended to be limited to such Examples.

<Example 1>

[Production of Positive Electrode Active Material]

A composite oxide including Ni, Co and Al ($Ni_{0.92}CO_{0.03}Al_{0.05}O_2$), LiOH, and a mixture of $Ti(SO_4)_2$ and $Ti(OH)_4$ mixed at a molar ratio of 3:7 were mixed so that the molar ratio was 100:101:1. The mixture was fired in an oxygen gas flow at 700°C for 20 hours, thereby obtaining a lithium transition metal oxide. The amount of sulfate ions in the resulting lithium transition metal oxide was measured, and as a result, was 0.03 mol%. Each of the proportions of Ni, Co, Al and Ti relative to the total number of moles of Ni, Co, Al and Ti in the resulting lithium transition metal oxide was measured, and as a result, the proportion of Ni was 91 mol%, the proportion of Co was 3 mol%, the proportion of Al was 5 mol%, and the proportion of Ti was 1 mol%. The half width n of the diffraction peak of the (208) plane of the resulting lithium transition metal oxide was 0.44°. The measurement methods are as described above. The lithium transition metal oxide was adopted as a positive electrode active material of Example 1.

<Example 2>

A lithium transition metal oxide was produced in the same manner as in Example 1 except that a mixture of $Ti(SO_4)_2$ and $Ti(OH)_4$ mixed at a molar ratio of 7:3 was used. With respect to the lithium transition metal oxide, the amount of sulfate ions was 0.06 mol%, the proportion of Ni was 91 mol%, the proportion of Co was 3 mol%, the proportion of Al was 5 mol%, the proportion of Ti was 1 mol% and the half width n of the diffraction peak of the (208) plane was 0.45°. The lithium transition metal oxide was adopted as a positive electrode active material of Example 2.

<Example 3>

A lithium transition metal oxide was produced in the same manner as in Example 1 except that a composite oxide including Ni, Co and Al ($Ni_{0.92}Co_{0.03}Al_{0.05}O_2$), LiOH, and a mixture of $Al_2(SO_4)_3$ and $Ti(OH)_4$ mixed at a molar ratio of 3:7 were mixed so that the molar ratio was 100:101:1. With respect to the lithium transition metal oxide, the amount of sulfate ions was 0.04 mol%, the proportion of Ni was 91 mol%, the proportion of Co was 3 mol%, the proportion of Al was 5.3 mol%, the proportion of Ti was 0.7 mol% and the half width n of the diffraction peak of the (208) plane was 0.41°. The lithium transition metal oxide was adopted as a positive electrode active material of Example 3.

<Example 4>

A lithium transition metal oxide was produced in the same manner as in Example 3 except that a mixture of $Al_2(SO_4)_3$ and $Ti(OH)_4$ mixed at a molar ratio of 7:3 was used. With respect to the lithium transition metal oxide, the amount of sulfate ions was 0.12 mol%, the proportion of Ni was 91 mol%, the proportion of Co was 3 mol%, the proportion of Al was 5.7 mol%, the proportion of Ti was 0.3 mol% and the half width n of the diffraction peak of the (208) plane was 0.39°. The lithium transition metal oxide was adopted as a positive electrode active material of Example 4.

<Example 5>

A lithium transition metal oxide was produced in the same manner as in Example 1 except that a composite oxide including Ni, Co and Al ($Ni_{0.94}Co_{0.015}Al_{0.045}O_2$), LiOH, and a mixture of $MnSO_4$ and $Al(OH)_3$ mixed at a molar ratio of 3:7 were mixed so that the molar ratio was 100:101:1.5. With respect to the lithium transition metal oxide, the amount of sulfate ions was 0.03 mol%, the proportion of Ni was 92.5 mol%, the proportion of Co was 1.5 mol%, the proportion of Al was 5 mol%, the proportion of Mn was 1 mol% and the half width n of the diffraction peak of the (208) plane was 0.33°. The lithium transition metal oxide was adopted as a positive electrode active material of Example 5.

<Example 6>

A lithium transition metal oxide was produced in the same manner as in Example 5 except that a mixture of $MnSO_4$ and $Al(OH)_3$ mixed at a molar ratio of 7:3 was used. With respect to the lithium transition metal oxide, the amount of sulfate ions was 0.07 mol%, the proportion of Ni was 92.5 mol%, the proportion of Co was 1.5 mol%, the proportion of Al was 5.5 mol%, the proportion of Mn was 0.5 mol% and the half width n of the diffraction peak of the (208) plane was 0.37°. The lithium transition metal oxide was adopted as a positive electrode active material of Example 6.

<Example 7>

A lithium transition metal oxide was produced in the same manner as in Example 1 except that a composite oxide including Ni, Co and Al ($Ni_{0.94}Co_{0.015}Al_{0.045}O_2$), LiOH, and a mixture of $Al_2(SO_4)_3$ and $LiNbO_3$ mixed at a molar ratio of 3:7 were mixed so that the molar ratio was 100:101:1.5. With respect to the lithium transition metal oxide, the amount of sulfate ions was 0.04 mol%, the proportion of Ni was 92.5 mol%, the proportion of Co was 1.5 mol%, the proportion of Al was 5 mol%, the proportion of Nb was 1 mol% and the half width n of the diffraction peak of the (208) plane was 0.37°. The lithium transition metal oxide was adopted as a positive electrode active material of Example 7.

<Example 8>

A lithium transition metal oxide was produced in the same manner as in Example 7 except that a mixture of $Al_2(SO_4)_3$ and $LiNbO_3$ mixed at a molar ratio of molar ratio 7:3 was used. With respect to the lithium transition metal oxide, the amount of sulfate ions was 0.12 mol%, the proportion of Ni was 92.5 mol%, the proportion of Co was 1.5 mol%, the proportion of Al was 5.5 mol%, the proportion of Nb was 0.5 mol% and the half width n of the diffraction peak of the (208) plane was 0.41°. The lithium transition metal oxide was adopted as a positive electrode active material of Example 8.

<Example 9>

A lithium transition metal oxide was produced in the same manner as in Example 1 except that a composite oxide including Ni, Co and Al ($Ni_{0.945}Co_{0.005}Al_{0.050}O_2$), LiOH, and a mixture of $Al_2(SO_4)_3$ and $SiO_2$ mixed at a molar ratio of 7:3 were mixed so that the molar ratio was 100:101:1. With respect to the lithium transition metal oxide, the amount of sulfate ions was 0.05 mol%, the proportion of Ni was 93.5 mol%, the proportion of Co was 0.5 mol%, the proportion of Al was 5.7 mol%, the proportion of Si was 0.3 mol% and the half width n of the diffraction peak of the (208) plane was 0.34°. The lithium transition metal oxide was adopted as a positive electrode active material of Example 9.

<Example 10>

A lithium transition metal oxide was produced in the same manner as in Example 1 except that a composite oxide including Ni, Co and Al ($Ni_{0.955}Co_{0.005}Al_{0.04}O_2$), LiOH, and a mixture of $Al_2(SO_4)_3$ and $Ti(OH)_4$ mixed at a molar ratio of 1:9 were mixed so that the molar ratio was 100:101:3.5. With respect to the lithium transition metal oxide, the amount of sulfate ions was 0.03 mol%, the proportion of Ni was 92 mol%, the proportion of Co was 0.5 mol%, the proportion of Al was 4.5 mol%, the proportion of Ti was 3 mol% and the half width n of the diffraction peak of the (208) plane was 0.39°. The lithium transition metal oxide was adopted as a positive electrode active material of Example 10.

<Example 11>

A lithium transition metal oxide was produced in the same manner as in Example 1 except that a composite oxide including Ni, Co and Al ($Ni_{0.94}Co_{0.015}Al_{0.045}O_2$), LiOH, and a mixture of $Ti(SO_4)_2$ and $LiNbO_3$ mixed at a molar ratio of 7:3 were mixed so that the molar ratio was 100:101:1.5. With respect to the lithium transition metal oxide, the amount of sulfate ions was 0.05 mol%, the proportion of Ni was 93 mol%, the proportion of Co was 1.3 mol%, the proportion of Al was 4.2 mol%, the proportion of Ti was 1 mol%, the proportion of Nb was 0.5 mol% and the half width n of the diffraction peak of the (208) plane was 0.34°. The lithium transition metal oxide was adopted as a positive electrode active material of Example 11.

<Example 12>

A lithium transition metal oxide was produced in the same manner as in Example 1 except that a composite oxide including Ni, Co and Al ($Ni_{0.94}Co_{0.015}Al_{0.045}O_2$), LiOH, and a mixture of $Ti(SO_4)_2$ and $LiNbO_3$ mixed at a molar ratio of 5:5 were mixed so that the molar ratio was 100:101:1. With respect to the lithium transition metal oxide, the amount of sulfate ions was 0.04 mol%, the proportion of Ni was 93 mol%, the proportion of Co was 1.5 mol%, the proportion of Al was 4.5 mol%, the proportion of Ti was 0.5 mol%, the proportion of Nb was 0.5 mol% and the half width n of the diffraction peak of the (208) plane was 0.37°. The lithium transition metal oxide was adopted as a positive electrode active material of Example 12.

<Example 13>

A lithium transition metal oxide was produced in the same manner as in Example 1 except that a composite oxide ($Ni_{0.955}Al_{0.045}O_2$) including Ni and Al, LiOH, and a mixture of $Al_2(SO_4)_3$ and $Li_2MoO_4$ mixed at a molar ratio of 2:8 were mixed so that the molar ratio was 100:101:0.6. With respect to the lithium transition metal oxide, the amount of sulfate ions was 0.03 mol%, the proportion of Ni was 95 mol%, the proportion of Al was 4.5 mol%, the proportion of Mo was 0.5 mol% and the half width n of the diffraction peak of the (208) plane was 0.34°. The lithium transition metal oxide was adopted as a positive electrode active material of Example 13.

<Example 14>

A lithium transition metal oxide was produced in the same manner as in Example 1 except that a composite oxide including Ni, Co and Al ($Ni_{0.94}Co_{0.015}Al_{0.045}O_2$), LiOH, and a mixture of $Ti(SO_4)_2$ and $Li_2MoO_4$ mixed at a molar ratio of 5:5 were mixed so that the molar ratio was 100:101:1. With respect to the lithium transition metal oxide, the amount of sulfate ions was 0.04 mol%, the proportion of Ni was 93 mol%, the proportion of Co was 1.5 mol%, the proportion of Al was 4.5 mol%, the proportion of Ti was 0.5 mol%, the proportion of Mo was 0.5 mol% and the half width n of the diffraction peak of the (208) plane was 0.35°. The lithium transition metal oxide was adopted as a positive electrode active material of Example 14.

<Comparative Example 1>

A lithium transition metal oxide was produced in the same manner as in Example 1 except that a composite oxide including Ni, Co and Al ($Ni_{0.92}Co_{0.04}Al_{0.04}O_2$), LiOH, and $Ti(SO_4)_2$ were mixed so that the molar ratio was 100:101:1. With respect to the lithium transition metal oxide, the amount of sulfate ions was 0.1 mol%, the proportion of Ni was 91 mol%, the proportion of Co was 4 mol%, the proportion of Al was 4 mol%, the proportion of Ti was 1 mol% and the half width n of the diffraction peak of the (208) plane was 0.25°. The lithium transition metal oxide was adopted as a positive electrode active material of Comparative Example 1.

<Comparative Example 2>

A lithium transition metal oxide was produced in the same manner as in Example 1 except that a composite oxide including Ni, Co and Al ($Ni_{0.92}Co_{0.03}Al_{0.05}O_2$), LiOH, and $Al_2(SO_4)_3$ were mixed so that the molar ratio was 100:101:1. With respect to the lithium transition metal oxide, the amount of sulfate ions was 0.17 mol%, the proportion of Ni was 91 mol%, the proportion of Co was 3 mol%, the proportion of Al was 6 mol% and the half width n of the diffraction peak of the (208) plane was 0.27°. The lithium transition metal oxide was adopted as a positive electrode active material of Comparative Example 2.

<Comparative Example 3>

A lithium transition metal oxide was produced in the same manner as in Example 1 except that a composite oxide including Ni, Co and Al ($Ni_{0.935}Co_{0.015}Al_{0.05}O_2$), LiOH, and $MnSO_4$ were mixed so that the mass ratio was 100:101:1.5. With respect to the lithium transition metal oxide, the amount of sulfate ions was 0.13 mol%, the proportion of Ni was 92 mol%, the proportion of Co was 1.5 mol%, the proportion of Al was 5 mol%, the proportion of Mn was 1.5 mol% and the half width n of the diffraction peak of the (208) plane was 0.28°. The lithium transition metal oxide was adopted as a positive electrode active material of Comparative Example 3.

<Comparative Example 4>

A lithium transition metal oxide was produced in the same manner as in Example 1 except that a composite oxide including Ni, Co and Al ($Ni_{0.93}Co_{0.03}Al_{0.04}O_2$), and LiOH were mixed so that the molar ratio was 100:101. With respect to the lithium transition metal oxide, the amount of sulfate ions was 0.01 mol%, the proportion of Ni was 93 mol%, the proportion of Co was 3 mol%, the proportion of Al was 4 mol% and the half width n of the diffraction peak of the (208) plane was 0.23°. The lithium transition metal oxide was adopted as a positive electrode active material of Comparative Example 4.

<Comparative Example 5>

A lithium transition metal oxide was produced in the same manner as in Example 1 except that a composite oxide including Ni, Co and Al ($Ni_{0.935}Co_{0.01}Al_{0.055}O_2$), LiOH, and Al were mixed so that the molar ratio was 100:101:1. With respect to the lithium transition metal oxide, the amount of sulfate ions was 0.01 mol%, the proportion of Ni was 92.5 mol%, the proportion of Co was 1 mol%, the proportion of Al was 6.5 mol% and the half width n of the diffraction peak of the (208) plane was 0.28°. The lithium transition metal oxide was adopted as a positive electrode active material of Comparative Example 5.

[Production of Positive Electrode]

Ninety one parts by mass of the positive electrode active material of Example 1, 7 parts by mass of acetylene black as a conductive agent, and 2 parts by mass of polyvinylidene fluoride as a binder were mixed. The mixture was kneaded with a kneader (T.K. HIVIS MIX, manufactured by PRIMIX Corporation), thereby preparing a positive electrode mixture slurry. Next, the positive electrode mixture slurry was applied to aluminum foil having a thickness of 15 μm, and a coating film was dried, thereby forming a positive electrode active material layer on the aluminum foil. The resultant was adopted as a positive electrode of Example 1. The same manner was conducted to produce each positive electrode also in other Examples and Comparative Examples.

[Preparation of Non-Aqueous Electrolyte]

Ethylene carbonate (EC), methyl ethyl carbonate (MEC) and dimethyl carbonate (DMC) were mixed at a volume ratio of 3:3:4. Lithium hexafluorophosphate ($LiPF_6$) was dissolved in such a mixed solvent so that the concentration was 1.2 mol/L, and thus a non-aqueous electrolyte was prepared.

[Production of Test Cell]

The positive electrode of Example 1 and a negative electrode made of lithium metal foil were stacked so that such electrodes were opposite to each other with a separator being interposed therebetween, thereby producing an electrode assembly. Next, the electrode assembly and the non-aqueous electrolyte were inserted into an outer package made of aluminum, thereby producing a test cell. The same manner was conducted to produce each test cell also in other Examples and Comparative Examples.

[Measurement of Capacity Retention in Charge/Discharge Cycle]

After each of the test cells of Examples and Comparative Examples was subjected to constant current charge at a constant current of 0.2 C under an environmental temperature of 25°C until the battery voltage reached 4.3 V, the test cell was subjected to constant voltage charge at 4.3 V until the current value reached 0.05 mA, and subjected to constant current discharge at a constant current of 0.2 C until the battery voltage reached 2.5 V. The charge/discharge cycle was performed for 20 cycles, and the capacity retention in the charge/discharge cycle of such each of the test cells of Examples and Comparative Examples was determined according to the following equation. A higher value indicated that deterioration in charge/discharge cycle characteristics was more suppressed.

$$\text{Capacity retention} = (\text{Discharge capacity at } 20^{\text{th}} \text{ cycle/Discharge capacity at } 1^{\text{st}} \text{ cycle}) \times 100$$

[Measurement of Charge Transfer Resistance]

After each of the test cells of Examples and Comparative Examples was charged in the above charge conditions, AC impedance measurement in the range from 10 mHz to 100 kHz was performed, thereby creating a Cole-Cole plot. The charge transfer resistance was determined from the size of a substantially half circle appearing in the resulting Cole-Cole plot.

The results of the battery capacity (discharge capacity at 1st cycle), the charge transfer resistance and the capacity retention of each of the test cells of Examples and Comparative Examples are shown in Table 1.

Table 1]

| | Lithium transition metal oxide | | | | | | Battery characteristics | | |
|---|---|---|---|---|---|---|---|---|---|
| | Proportion of Ni (mol%) | Proportion of Co (mol%) | Proportion of Al (mol%) | Proportion of other element (mol%) | Half width of (208) plane (°) | Amount of sulfate ions (mol%) | Battery capacity (mAh/g) | Charge transfer resistance (Ω) | Capacity retention (%) |
| Example 1 | 91 | 3 | 5 | Ti:1 | 0.44 | 0.03 | 217 | 19 | 92.6 |
| Example 2 | 91 | 3 | 5 | Ti:1 | 0.45 | 0.06 | 216 | 22 | 92.3 |
| Example 3 | 91 | 3 | 5.3 | Ti:0.7 | 0.41 | 0.04 | 219 | 21 | 94.8 |
| Example 4 | 91 | 3 | 5.7 | Ti:0.3 | 0.39 | 0.12 | 215 | 25 | 93.9 |
| Example 5 | 92.5 | 1.5 | 5 | Mn:1 | 0.33 | 0.03 | 219 | 18 | 93.3 |
| Example 6 | 92.5 | 1.5 | 5.5 | Mn:0.5 | 0.37 | 0.07 | 217 | 25 | 93.7 |
| Example 7 | 92.5 | 1.5 | 5 | Nb:1 | 0.37 | 0.04 | 221 | 26 | 96.4 |
| Example 8 | 92.5 | 1.5 | 5.5 | Nb:0.5 | 0.41 | 0.12 | 218 | 29 | 95.8 |
| Example 9 | 93.5 | 0.5 | 5.7 | Si:0.3 | 0.34 | 0.05 | 222 | 27 | 94.3 |
| Example 10 | 92 | 0.5 | 4.5 | Ti:3 | 0.39 | 0.03 | 217 | 30 | 93.2 |
| Example 11 | 93 | 1.3 | 4.2 | Ti:1 Nb:0.5 | 0.34 | 0.05 | 223 | 28 | 95.3 |
| Example 12 | 93 | 1.5 | 4.5 | Ti:0.5 Nb:0.5 | 0.37 | 0.04 | 223 | 23 | 96.1 |
| Example 13 | 95 | 0 | 4.5 | Mo:0.5 | 0.34 | 0.03 | 220 | 28 | 95.8 |
| Example 14 | 93 | 1.5 | 4.5 | Ti:0.5 Mo:0.5 | 0.35 | 0.04 | 220 | 29 | 96.3 |
| Comparative Example 1 | 91 | 4 | 4 | Ti:1 | 0.25 | 0.1 | 207 | 25 | 92.5 |
| Comparative Example 2 | 91 | 3 | 6 | - | 0.27 | 0.17 | 198 | 35 | 94.8 |
| Comparative Example 3 | 92 | 1.5 | 5 | Mn:1.5 | 0.28 | 0.13 | 202 | 22 | 93.7 |
| Comparative Example 4 | 93 | 3 | 4 | - | 0.23 | 0.01 | 220 | 82 | 83.3 |

12

| | Lithium transition metal oxide | | | | | | Battery characteristics | | |
|---|---|---|---|---|---|---|---|---|---|
| | Proportion of Ni (mol%) | Proportion of Co (mol%) | Proportion of Al (mol%) | Proportion of other element (mol%) | Half width of (208) plane (°) | Amount of sulfate ions (mol%) | Battery capacity (mAh/g) | Charge transfer resistance ($\Omega$) | Capacity retention (%) |
| Comparative Example 5 | 92.5 | 1 | 6.5 | - | 0.28 | 0.01 | 208 | 67 | 96.1 |

EP 3 780 178 A1

Examples 1 to 14 all exhibited high capacity retention and battery capacity as well as a low charge transfer resistance. In contrast, Comparative Examples 1 to 5 exhibited a low capacity retention, a low battery capacity or a high charge transfer resistance. As a result, a positive electrode active material having a Ni- and Al-containing lithium transition metal oxide, wherein the proportion of Ni in the lithium transition metal oxide is 91 mol% or more relative to the total number of moles of metal element(s) except for Li, the lithium transition metal oxide includes 0.02 mol% or more of sulfate ions, and the half width n of the diffraction peak of the (208) plane of the lithium transition metal oxide, in an X-ray diffraction pattern with X-ray diffraction, is $0.30° \leq n \leq 0.50°$ is used to thereby not only enable deterioration in charge/discharge cycle characteristics to be suppressed, but also enable an increase in charge transfer resistance in charge/discharge to be suppressed to result in suppression of deterioration in battery capacity.

**Claims**

1.   A positive electrode active material for a non-aqueous electrolyte secondary battery, having:

a Ni- and Al-containing lithium transition metal oxide, wherein
a proportion of Ni in the lithium transition metal oxide is 91 mol% or more relative to the total number of moles of metal element(s) except for Li,
the lithium transition metal oxide includes 0.02 mol% or more of sulfate ions, and
a half width n of a diffraction peak of the (208) plane of the lithium transition metal oxide, in an X-ray diffraction pattern with X-ray diffraction, is $0.30° \leq n \leq 0.50°$.

2.   A non-aqueous electrolyte secondary battery comprising a positive electrode including the positive electrode active material for a non-aqueous electrolyte secondary battery according to claim 1.

# EP 3 780 178 A1

<div align="center">

**INTERNATIONAL SEARCH REPORT**

</div>

| | International application No. |
|---|---|
| | PCT/JP2019/007310 |

**A. CLASSIFICATION OF SUBJECT MATTER**
Int.Cl. H01M4/525(2010.01)i

According to International Patent Classification (IPC) or to both national classification and IPC

**B. FIELDS SEARCHED**

Minimum documentation searched (classification system followed by classification symbols)
Int.Cl. H01M4/00-4/62

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2018-22689 A (SAMSUNG ELECTRONICS CO., LTD.) 08 February 2018, paragraphs [0022], [0027], [0028], [0050], [0072], [0081], [0082], [0096], [0097] & US 2018/0040882 A1, paragraphs [0059], [0068], [0069], [0081], [0114], [0122], [0123], [0137]-[0139] & EP 3279144 A1 & KR 10-2018-0015575 A & CN 107689447 A | 1-2<br>1-2 |
| Y | JP 2015-125833 A (TOYOTA MOTOR CORPORATION) 06 July 2015, paragraphs [0008], [0009], [0029] (Family: none) | 1-2 |

☒ Further documents are listed in the continuation of Box C.    ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 23.04.2019 | 14.05.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**INTERNATIONAL SEARCH REPORT**

| International application No. |
| --- |
| PCT/JP2019/007310 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2016-110889 A (SAMSUNG SDI CO., LTD.) 20 June 2016, paragraphs [0005], [0006], [0009]-[0012], [0030], [0084], table 3, comparative examples 4, 5 & US 2016/0164094 A1, paragraphs [0006], [0007], [0010]-[0016], [0049], [0116], table 3, reference example 3, comparative example 2 & EP 3032618 A2 & CN 105702952 A & KR 10-2016-0069992 A | 1-2 |
| A | WO 2017/110063 A1 (PANASONIC INTELLECTUAL PROPERTY MANAGEMENT CO., LTD.) 29 June 2017, paragraphs [0010], [0019]-[0022], [0035]-[0038] & US 2018/0375096 A1, paragraphs [0012], [0022]-[0025], [0038]-[0040] & CN 108292750 A | 1-2 |

Form PCT/ISA/210 (continuation of second sheet) (January 2015)

**EP 3 780 178 A1**

**Patent documents cited in the description**

- JP 2010070431 A
- JP 2006202702 A